(19) Europäisches Patentamt / European Patent Office / Office européen des brevets

(11) **EP 1 780 514 A1**

(12) **EUROPÄISCHE PATENTANMELDUNG**

(43) Veröffentlichungstag:
**02.05.2007 Patentblatt 2007/18**

(51) Int Cl.:
*G01D 5/22* *(2006.01)*      *G01D 3/032* *(2006.01)*

(21) Anmeldenummer: **06009624.5**

(22) Anmeldetag: **10.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **26.10.2005  DE 102005051219**

(71) Anmelder: **Bosch Rexroth Aktiengesellschaft
70184 Stuttgart (DE)**

(72) Erfinder: **Penz, Norbert
97816 Lohr am Main (DE)**

(54) **Messvorrichtung und Antriebsregler**

(57)    Die vorliegende Erfindung betrifft eine Messvorrichtung zur digitalen Erfassung einer Messgröße. Die Messvorrichtung ist mit einem Signalerzeuger zum Erzeugen eines periodischen, elektrischen Ansteuersignals einer vorgegebenen Signalform und mit einem Sensor, der eingangsseitig mit dem Signalgenerator verbunden ist und der ausgangsseitig ein von der Messgröße abhängiges Messsignal erzeugt, dessen Signalform durch das Ansteuersignal bestimmt ist, ausgestattet. Ein Analog/Digital-Umsetzer ist zur Erfassung eines Momentanwerts des Messsignals und eine digitalen Recheneinheit ist zur Verarbeitung des von dem Analog/Digital-Umsetzer erfassten Werts vorgesehen. Eine Steuereinheit steuert den Analog/Digital-Umsetzer so an, dass dieser mit einem konstanten Zeitversatz bezüglich einer Signalperiode des Ansteuersignals den Momentanwert des Messsignals erfasst. Die Recheneinheit wird so angesteuert, dass in Abhängigkeit von der Größe des Zeitversatzes ein Vorzeichen einer auf den erfassten Wert angewandten Rechenoperation festgelegt ist.

FIG. 2

EP 1 780 514 A1

## Beschreibung

Die Erfindung betrifft eine Messvorrichtung zur digitalen Erfassung einer Messgröße gemäß dem Oberbegriff des Anspruchs 1. Die Erfindung betrifft des Weiteren einen Antriebsregler für eine hydraulisch oder elektrisch angetriebene Achse.

Antriebsregler kommen zum Beispiel in hydraulisch angetriebenen Hohnmaschinen und Nibbelmaschinen zum Einsatz. Bei solchen Maschinen treten sehr schnelle Hubbewegungen auf, die durch eine Lageregelung insbesondere im Umkehrpunkt präzise kontrolliert werden müssen. Dazu ist eine schnelle, möglichst präzise Erfassung des Lage-Ist-Wertes des Antriebs erwünscht.

Die Druckschrift WO 93/20409 beschreibt unter anderem eine digitale Wegmessvorrichtung mit einem induktiven Differentialtransformatorsensor (LVDT-Sensor). Der Sensor ist mit dem Rechtecksignal eines Oszillators beaufschlagt. Das Ausgangssignal des Sensors wird direkt einem Mikrocontroller mit integrierten Analog/Digital-Wandler zugeführt und von diesem abgetastet. Die Abtastung erfolgt mit einer Frequenz, die ungefähr der Oszillatorfrequenz entspricht, so dass eine Unterabtastung vorliegt. Durch Variation des Abtastzeitpunkts innerhalb aufeinanderfolgender Signalperioden wird - unter der Voraussetzung, dass das Sensorsignal sich nicht oder nur vergleichsweise langsam ändert - die Signalform einer Periode des Messsignals rekonstruiert. Das rekonstruierte Messsignal wird einer Demodulation unterzogen, um einen numerischen Messwert zu erhalten.

Nachteilig an dieser herkömmlichen Wegmessvorrichtung ist, dass der schließlich aus dem Messsignal berechnete Positionswert gegenüber der Auslenkung des Sensors eine große Zeitverzögerung aufweist. Die vorgeschlagene Rekonstruktion des Sensorsignals benötigt bereits mehrere Messwerte aus verschiedenen Signalperioden des Sensorsignals.

Eine weitere digitale Auswerteschaltung für einen induktiven Sensor ist in der Druckschrift JP-A-8 094383 angegeben. Eine Vollbrückenschaltung mit zwei Messspulen wird mit einem Reckeckimpuls angeregt. Mit einem bestimmten Zeitversatz zur fallenden Flanke des Anregungsimpulses werden die Spannungen an den zwei Ausgangsknoten der Brückenschaltung durch einen A/D-Wandler erfasst. Aus der Differenz der an den Ausgangsknoten erfassten Spannungen wird ein Messwert berechnet.

Diese Schaltung erlaubt eine schnelle Messung des Sensorsignals, da insbesondere nach einem einzigen Anregungsimpuls ein auswertbares Messsignal vorliegt. Allerdings ist eine solche Schaltung anfällig gegen eingestreute Störsignale und hinsichtlich des Messzeitpunktes und des Auswerteschemas wenig flexibel.

Die der vorliegenden Erfindung zugrunde liegende Aufgabe ist es demzufolge, eine verbesserte Messvorrichtung anzugeben, die insbesondere eine schnelle, einfach an verschiedene Messerfordernisse anpassbare Auswertung eines Sensorsignals gewährleistet.

Diese Aufgabe wird erfindungsgemäß durch eine Messvorrichtung mit den Merkmalen des Patentanspruchs 1 gelöst.

Eine erfindungsgemäße Messvorrichtung zur digitalen Erfassung einer Messgröße ist mit einem Signalerzeuger zum Erzeugen eines periodischen, elektrischen Ansteuersignals einer vorgegebenen Signalform und mit einem Sensor, der eingangsseitig mit dem Signalgenerator verbunden ist und der ausgangsseitig ein von der Messgröße abhängiges Messsignal erzeugt, dessen Signalform durch das Ansteuersignal bestimmt ist, ausgestattet. Ein Analog/Digital-Umsetzer ist zur Erfassung eines Momentanwerts des Messsignals und eine digitalen Recheneinheit ist zur Verarbeitung des von dem Analog/Digital-Umsetzer erfassten Werts vorgesehen. Es wird vorgeschlagen, eine Steuereinheit vorzusehen, die den Analog/Digital-Umsetzer so ansteuert, dass dieser mit einem konstanten Zeitversatz bezüglich einer Signalperiode des Ansteuersignals den Momentanwert des Messsignals erfasst, und die die Recheneinheit so ansteuert, dass in Abhängigkeit von der Größe des Zeitversatzes ein Vorzeichen einer auf den erfassten Wert angewandten Rechenoperation festgelegt ist.

Eine solche Messvorrichtung erlaubt es in kürzester Zeit, insbesondere nach Erfassung eines einzigen Sensorsignalwertes, ein digital ausgewertetes Messsignal auszugeben. Zudem kann der bezüglich der Ansteuersignalperiode konstante Erfassungszeitpunkt des Messsignals flexibel vorgegeben werden. Dadurch lässt sich ein für die Messung günstiger Signalabschnitt schon bei der digitalen Erfassung effizient festlegen. Das Vorzeichen der auf den erfassten Sensorsignalwert angewandten Rechenoperation ergibt sich automatisch in Abhängigkeit vom Messzeitpunkt. Die analoge Signalverarbeitung beschränkt sich auf die Zuführung des Sensorsignals zum A/D-Wandler. Somit ist eine präzise und zuverlässige, durch die überwiegend digitale Signalverarbeitung wenig störanfällige Signalauswertung gewährleistet. Insbesondere der Einfluss von Bauteiltoleranzen ist gegenüber einer analogen Auswerteschaltung deutlich verringert.

Gemäß einem weiteren Aspekt der vorliegenden Erfindung weist ein Antriebsregler für eine hydraulisch oder elektrisch angetriebene Achse einen Microcontroller zur Ansteuerung eines Achsenantriebs auf. Eine Messvorrichtung nach einem der Patentansprüche 1 bis 12 ist zur Erfassung einer Achsenposition vorgesehen. Die Steuervorrichtung der Messvorrichtung ist als ein auf dem Microcontroller ausführbares Programm implementiert.

Auf diese Weise lässt sich mit einem geringem Aufwand an zusätzlichen Bauteilen und entsprechend geringen Herstellungskosten ein Antriebsregler mit einer integrierten digitalen Sensorauswerteschaltung versehen.

Weitere vorteilhafte Ausgestaltungen sind in den Unteransprüchen angegeben.

Besonders bevorzugt ist eine Ausgestaltung gemäß Patentanspruch 4, bei der während einer Periode des Sensorausgangssignals zwei Signalabschnitte mit unterschiedlichen, jedoch innerhalb der Signalabschnitte annähernd konstanten Signalamplituden vorhanden sind. Der Zeitpunkt der Momentanwerterfassung liegt innerhalb eines dieser Signalabschnitte. Innerhalb der abschnittsweise annähernd konstanten Signalabschnitte ist eine zuverlässig Erfassung des Sensorsignals gewährleistet, wodurch selbst dann, wenn nur ein Signalwert zur Berechnung des Messergebnisses verwendet wird, eine hohe Genauigkeit des Messergebnisses gegeben ist. Dagegen sind Signalanteile, die durch Einschwingvorgänge verursacht sind, hinsichtlich der Erfassung problematischer. Unter Anderem wäre eine höhere Zeitgenauigkeit bei der Erfassung erforderlich. Schon eine geringe Phasenverschiebung des Sensorsignals gegenüber dem Ansteuersignal würde zu einem Messfehler führen.

Die gemäß dieser Ausgestaltung festgelegte Signalform des Messsignals lässt sich z.B. dadurch erhalten, dass der Signalerzeuger ein zwischen zwei Spannungswerten oszillierendes Rechtecksignal erzeugt. Als Sensor bietet sich ein Differentialtransformatorwegsensor an, dessen Strombelastung möglichst gering gehalten ist. Durch die Verwendung eines Rechteck-Eingangssignals steht am Ausgang des Sensors ein Signal mit einem im Wesentlichen ebenfalls rechteckförmigen Verlauf an.

Umfasst der Signalerzeuger einen Schalter, der seitens der Steuervorrichtung durch ein Schaltsignal ansteuerbar ist, lässt sich die Erzeugung des Ansteuersignals hinsichtlich des Signalbeginns, der Dauer und der Frequenz effizient steuern. Außerdem erleichtert die Ansteuerung des Signalerzeugers durch die Steuervorrichtung die Berücksichtigung des Zeitversatzes zwischen Ansteuersignal und Messsignal bei der Auswertung des Messsignals.

Gemäß einer weiteren besonders bevorzugten Ausgestaltung ist ein Speicher mit einer ersten Speicherstelle für die Ablage eines innerhalb des ersten Signalabschnitts erfassten Werts und mit einer zweiten Speicherstelle für die Ablage eines innerhalb des zweiten Signalabschnitts erfassten Werts vorgesehen. Die Recheneinheit subtrahiert den in der zweiten Speicherstelle abgelegten Zahlenwert von dem in der ersten Speicherstelle abgelegten Zahlenwert. Die Zuordnung zwischen den Signalabschnitten und den Speicherstellen erlaubt die einfache Weiterverarbeitung der erfassten Messwerte zur Berechnung des Messergebnisses. Die gespeicherten Signalwerte sind eindeutig einem zeitlichem Abschnitt der Messsignal- bzw. Ansteuersignalperiode zugeordnet. Dies ermöglicht eine der Synchrongleichrichtung entsprechende Auswertung. Durch die digitale Subtraktion der Messwerte aus zwei verschiedenen Signalabschnitten wird eine beliebige, dem Messsignal überlagerte Gleichspannung effizient entfernt. Ein herkömmlicher Weise für einen solchen Zweck eingesetzter Hochpassfilter kann entfallen. Der bei einem Differentialtransformator-Wegsensor, auftretende Phasensprung des Messsignals um 180°, wenn die Auslenkung des Kerns eine Mittelstellung durchläuft, äußert sich durch einen Vorzeichenwechsel des berechneten Messergebnisses. Die Berücksichtigung zweier Messwerte aus verschiedenen Signalabschnitten reduziert zudem den Einfluss von Störsignalen.

Der Einfluss von Störsignalen lässt sich weiter reduzieren, wenn eine gleiche Anzahl erster Speicherstellen und zweiter Speicherstellen zur Ablage einer geraden Anzahl von aufeinanderfolgend erfassten Werten vorgesehen ist, und wenn die Recheneinheit die aus den Werten jeweils einer ersten Speicherstelle und einer zweiten Speicherstelle gebildeten Differenzen aufsummiert. Die Tiefpasseigenschaften einer solchen Auswertevorschrift lassen sich durch die Anzahl der berücksichtigten Speicherstellen einstellen.

Gemäß einer bevorzugte Ausgestaltung werden vier aufeinander folgende Messwerte in jeweils zwei ersten und zwei zweiten Speicherstellen erfasst und zur Berechnung des Messergebnisses berücksichtigt. Dadurch tritt bei der Ausgabe des Messergebnisses nur eine geringe Zeitverzögerung auf, während gleichzeitig der Einfluss von Störsignalen gegenüber der Auswertung von Einzelmesswerten deutlich verringert ist. Auch lässt sich die Auswertegenauigkeit des Messsignals im Rahmen eines durch die Erfassung mehrerer Messwerte durchgeführten Oversamplings verbessern.

Vorzugsweise werden im Speicher nach Auffüllen der ersten und zweiten Speicherstellen die jeweils ältesten Werte überschrieben. Auf diese Weise lässt sich ein kontinuierliche Signalauswertung auf der Grundlage der Taktzeit des Ansteuersignals realisieren.

Insbesondere wenn der erste und der zweite Signalabschnitt gegeneinander um eine halbe Periodendauer des Messsignals und/oder Ansteuersignals versetzt sind, entspricht die Subtraktion der Messwerte einer Synchrongleichrichtung der erfassten Messwerte.

Ist eine Verbindungsleitung zwischen dem Sensor und dem Analog/Digital-Umsetzer über einen hochohmigen Widerstand mit einem Potential verbunden, das außerhalb des Spannungsbereichs des Messsignals liegt, so lässt sich eine defekte Verbindung zum Sensor leicht erkennen.

Vorzugsweise ist bei einem Antriebsregler gemäß Anspruch 15 ein Verstärker zwischen dem Sensor und dem Analog/Digital-Umsetzer vorhanden, dessen Verstärkungsfaktor durch den Microcontroller steuerbar ist. Dadurch lässt sich die Verstärkung in einfacher Weise an den verwendeten Sensor und ein vorgegebenes Auswerteschema anpassen.

Nachfolgend werden die vorliegende Erfindung und deren Vorteile unter Bezugnahme auf das in den Figuren dargestellte Ausführungsbeispiel näher erläutert.

Es zeigen:

Fig. 1      einen Regelkreis mit einem hydraulischen Zylinder, Steuerventilen und einer elektronischen Regeleinheit

Fig. 2      ein Blockschaltbild der Regeleinheit mit einer integrierten Wegsensor-auswerteschaltung und einem angeschlossenen induktiven Wegsensor,

Fig. 3A      einen Differenzverstärker und einen Anpassverstärker im analogen Signalweg der Wegsensorauswerteschaltung,

Fig. 3B      ein Prinzipschaltbild eines Signalgenerators zur Erzeugung eines Ansteuersignals für den Wegsensor,

Fig. 4      den zeitlichen Verlauf des Steuersignals für den Signalerzeuger und eines Steuersignals für die Analog/Digital-Umsetzung des Messsignals und

Fig. 5      den zeitlichen Verlauf des dem Analog/Digital-Umsetzer zugeführten Messsignals im Verhältnis zu dem Ansteuersignal.

Anhand der Figuren folgt nun die detaillierte Beschreibung des Ausführungsbeispiels.

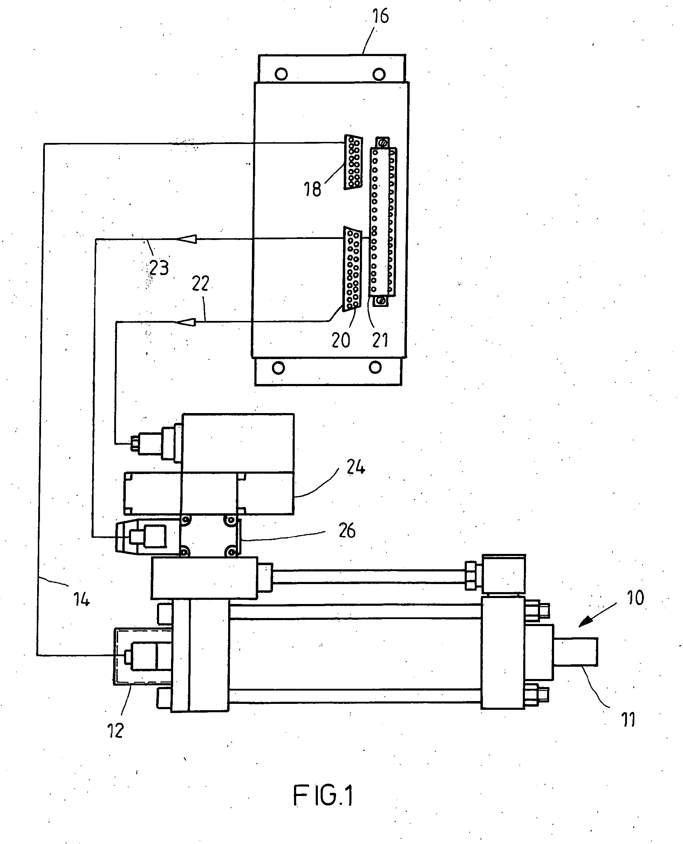

In Figur 1 ist ein Regelkreis für einen hydraulischen Zylinder dargestellt. Der Zylinder 10 ist mit einem integrierten Wegsensor 12 versehen, der die Position der Kolbenstange 11 in ein elektrisches Signal umsetzt. Das Sensorsignal wird über'die elektrische Leitung 14 einem Sensoranschluss 18 einer Regeleinheit 16 zugeführt. Die Regeleinheit 16 besitzt des Weiteren Ausgangsanschlüsse 20 und 21 für Steuersignale. Die Steuersignale sind über die elektrischen Leitungen 22 und 23 einem magnetisch betätigbaren, stetig verstellbaren Wegeventil 24 und einem Absperrventil 26 zugeführt. Die Ventile 24 und 26 sind mit den Fluidanschlüssen des Zylinders 10 verbunden.

Die Regeleinheit 16 wertet das Sensorsignal des Wegsensors 12 aus und erhält auf diese Weise ein Ist-Signal für die Position der Kolbenstange 11. Nach Vergleich mit einem vorgegebenen Soll-Wert gibt die Regeleinheit 16 an den Ausgangsanschlüssen 20 bzw. 21 Steuersignale als Stellgröße zur Steuerung der Zylinderbewegung aus.

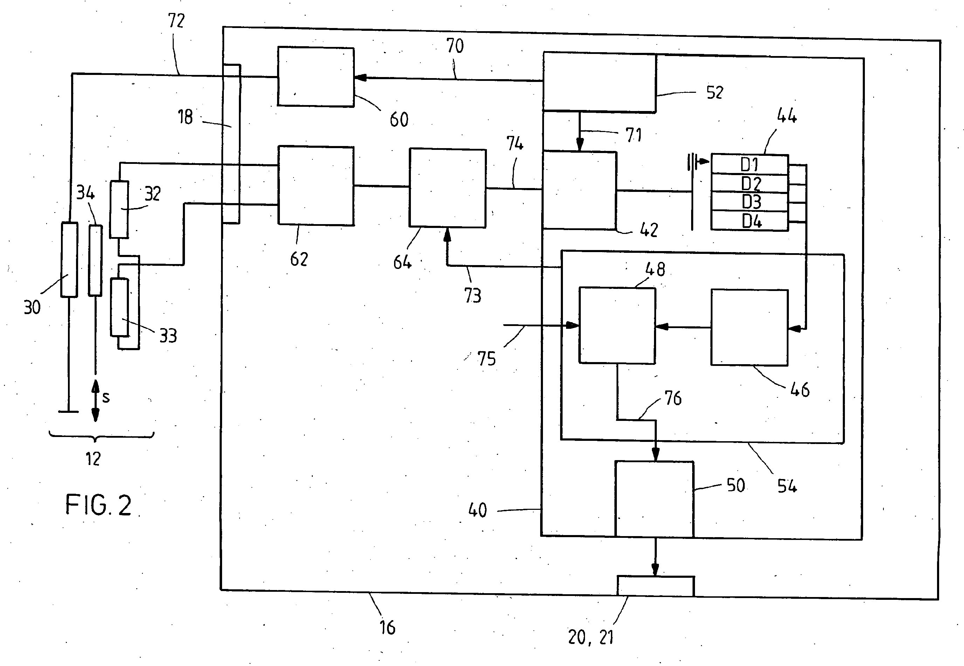

Der Aufbau der Regeleinheit 16 und des induktiven Wesensensors 12 ist in der Figur 2 näher dargestellt.

Bei dem Wegsensor 12 handelt es sich um einen an sich bekannten Differentialspulensensor. Dieser umfasst eine Primärspule 30 sowie zwei Sekundärspulen 32 und 33 auf einem (nicht dargestellten) Spulenkörper. Innerhalb des Spulenkörpers ist ein beweglich geführter Kern 34 vorgesehen. Die Sekundärspulen 32 und 33 sind so geschaltet, dass die in der Sekundärspule 32 erzeugte Spannung der in der Sekundärspule 33 erzeugten Spannung entgegensteht, so dass am Ausgang des Sensors 12 die Differenz der in den Sekundärspulen 32 und 33 erzeugten Spannungen ansteht. Die am Ausgang erzeugte Spannung variiert gemäß der Auslenkung "s" des Kerns 34, auf den die Bewegung der Kolbenstange 11 übertragen wird.

Die Regeleinheit 16 umfasst einen Microcontroller 40. Des Weiteren sind ein Signalerzeuger 60, ein Differenzverstärker 62 und ein Anpassverstärker 64 vorhanden. Außerdem sind die Anschlüsse 18 für den Wegsensor und die Anschlüsse 20, 21 für die Ventilsteuersignale dargestellt. Der Signalerzeuger 60 ist mit der Primärspule 30 des Wegsensors 12 verbunden. Der Differenzverstärker 62 ist an die Sekundärspulen 32 und 33 angeschlossen. Das Ausgangssignal des Differenzverstärkers 62 ist dem Anpassverstärker 64 zugeführt. Der Differenzverstärker 62 und der Anpassverstärker 64 bilden den analogen Abschnitt der in der Regeleinheit 16 integrierten Wegsensorauswerteschaltung.

Die weitere Auswertung des Wegsensorsignals erfolgt digital. Die entsprechenden Bestandteile der Wegsensorauswerteschaltung sind teils als Hardware, teils als Software in dem Microcontroller 40 implementiert. Im Microcontroller 40 sind ein Analog/Digital-Umsetzer 42, ein Speicher 44, eine Recheneinheit 46, eine Regel- und Steuerlogik 48, eine Ausgangsschaltung 50, ein Zeitsignalgenerator 52 sowie ein Prozessor 54 zur Ausführung eines Steuerprogramms vorgesehen.

Der Zeitsignalgenerator 52 erzeugt ein Steuersignal 70 für den Signalgenerator 60. Über das Steuersignal 70 lässt sich der Beginn der Signalerzeugung, die Dauer der Signalerzeugung und die Frequenz des vom Signalerzeuger 60 ausgegebenen periodisch oszillierenden Ansteuersignals 72 einstellen.

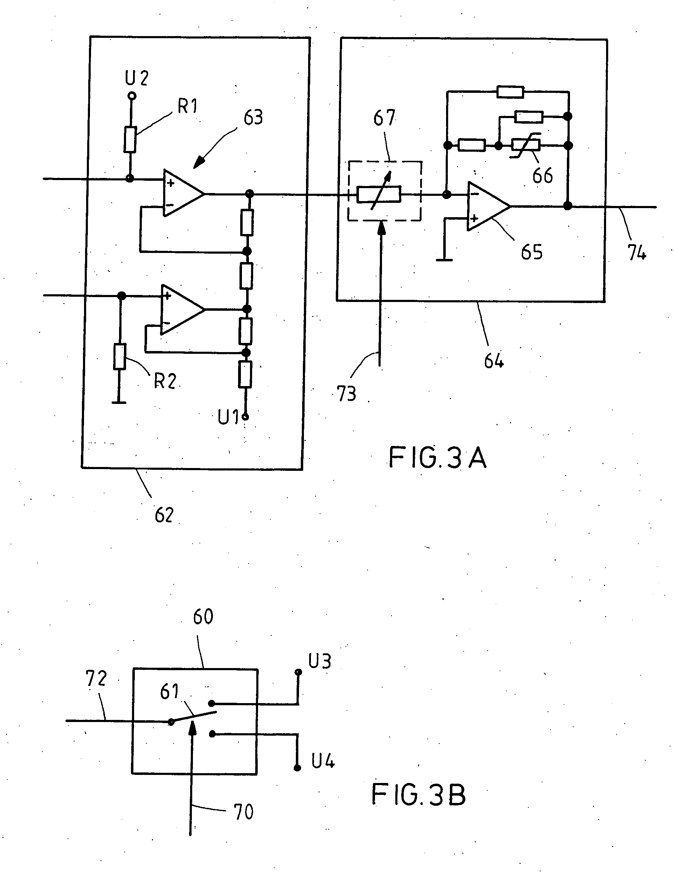

Der Signalerzeuger 60 ist in Figur 3B näher dargestellt. Ein elektronischer Schalter 61 schaltet synchron zum Takt des Steuersignals 70 zwischen zwei Spannungen und erzeugt so das Ansteuersignal 72 in Form eines periodischen Rechtecksignals. Im dargestellten Ausführungsbeispiel oszilliert das Rechtecksignal zwischen U3 = 5V und U4 = 0V.

Der Sensor 12 ist primärseitig mit dem periodischen Rechtecksignal 72 beaufschlagt. In den Sekundärspulen 32, 33 wird eine ebenfalls annähernd recheckförmige Spannung gleicher Frequenz induziert. Bei einer Mittelstellung des Kerns 34 heben sich die induzierten Spannungen gerade auf, so dass am Ausgang des Sensors 12 keine Spannung anliegt. Beim Durchgang durch die Mittelstellung ändert das Sensorsignal aufgrund der entgegengesetzt geschalteten Sekundärspulen 32, 33 seine Phase um 180°.

Das Signal des Sensors wird dem Differenzverstärker 62 zugeführt, der die Differenz der in den Spulen 32 und 33 induzierten Spannung verstärkt. Dem Differenzverstärker 62 ist ein Anpassverstärker 64 nachgeschaltet, dessen Verstärkungsfaktor durch den Microcontroller 40 über ein Steuersignal 73 vorgegeben wird.

Der Anpassverstärker 64 dient dazu, den Spannungsbereich des Sensorsignals an das Eingangsspannungsintervall des Analog/Digital-Umsetzers 42 anzupassen.

Der Differenzverstärker 62 und der Anpassverstärker 64 sind in Figur 3A detaillierter dargestellt. Der Differenzverstärker 62 besteht im Wesentlichen aus einer Verstärkerschaltung 63 mit zwei Operationsverstärkern, die die am Sensor 12 ausgegebene Wechselspannung verstärken. Das Wechselspannungssignal des Sensors 12 wird zudem mit einer vorgegebenen Gleichspannung U1 überlagert. Weiter sind zwei hochohmige Widerstände R1 und R2 vorgesehen, die in Abwesenheit eines Sensorsignals eine vorgegebene Spannungsdifferenz U2 am Eingang des Differenzverstärkers 62 erzeugen. Im dargestellten Ausführungsbeispiel beträgt das Eingangsspannungsintervall des Analog/Digital-Umsetzers 0V bis 5V. U1 wird auf 2,5V gesetzt, damit positive und negative Signalpegel des Sensorsignals erfasst werden können. Der Verstärkungsfaktor der Verstärkerschaltung 63 beträgt 2. U2 wird auf 2,5V gesetzt, so dass im Fall einer fehlenden Verbindung zum Sensor 12 - z.B. bei Kabelbruch — die vom Differenzverstärkers 62 erzeugte Spannung mit 7,5V deutlich außerhalb des Eingangsspannungsintervalls des Analog/Digital-Umsetzers 42 liegt. Dadurch lässt sich ein solcher Fehler sicher erkennen.

Der Anpassverstärker, 64 beruht auf einem Operationsverstärker 65. Der Verstärkungsfaktor ist durch ein Digitalpotentiometer 67 einstellbar. Das Digitalpotentiometer 67 lässt sich seitens des Microcontroller 40 über das Steuersignal 73 einstellen. Dadurch kann die Verstärkung des Sensorsignals auf einfache Weise an den verwendeten Sensor und die Messanforderungen angepasst werden. Beispielsweise kann bei Anwendungen, die nur eine geringe Auslenkungen des Sensors bedingen, die Verstärkung erhöht werden, um die Auflösung zu verbessern. Der Verstärkungsfaktor lässt sich durch ein Steuerprogramm oder über eine graphische Benutzeroberfläche benutzerfreundlich einstellen. Das Weiteren wird der Verstärkungsfaktor des Anpassverstärkers 64 durch einen temperatursensitiven NTC-Widerstand 66 bestimmt. Der NTC-Widerstand 66 ist so ausgelegt, dass eine temperaturbedingte Variation des Sensorsignals weitgehend kompensiert wird.

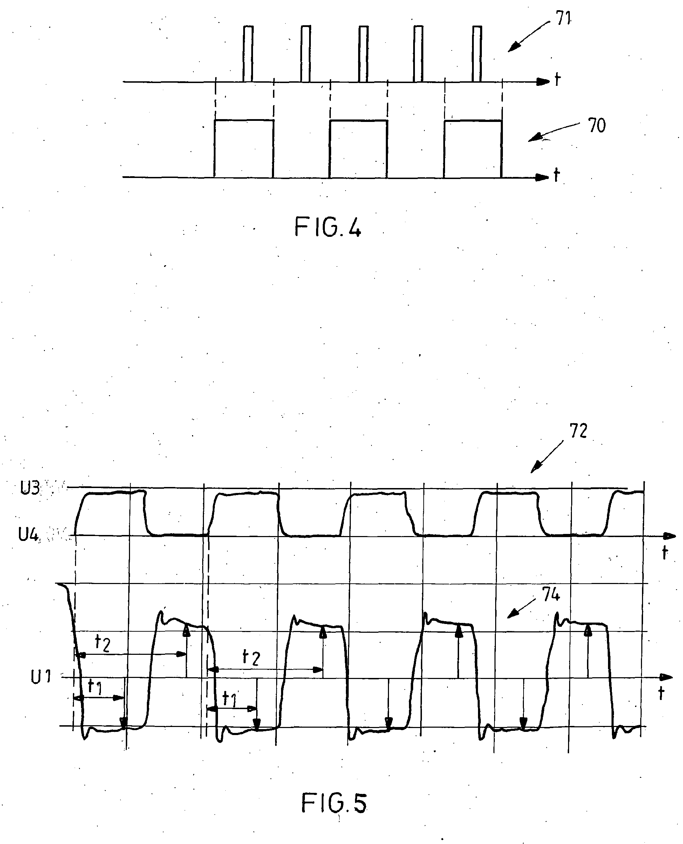

Das Ausgangssignal 74 des Anpassverstärkers 64 wird dem im Microcontroller 40 integrierten Analog/Digital-Umsetzers 42 zugeführt. Über das Steuersignal 71 gibt der Zeitsignalgenerator 52 die Abtastzeitpunkte für die Erfassung des verstärkten Sensorsignals 74 vor. Die Figur 4 stellt den zeitlichen Verlauf der Steuersignale 70, 71 für die Abtastzeitpunkte und die Ansteuersignalerzeugung dar. Die untere Zeitleiste stellt das Steuersignal 70 für das Ansteuersignal 72 dar. Das Ansteuersignal 72 folgt - hinsichtlich der Spannung entsprechend skaliert — dem Signalverlauf des Steuersignals 70. Auf der oberen Zeitleiste ist das Steuersignal 71 für die Abtastung dargestellt. Zu erkennen ist, dass in jeder Signalperiode des Steuersignals 70 bzw. Ansteuersignals 72 zwei Abtastvorgänge durch Signalpulse des Steuersignals 71 ausgelöst werden. Die Abtastzeitpunkte liegen etwa im mittleren Bereich jeder Halbperiode des Ansteuersignals 72.

Die Figur 5 stellt den Verlauf des Ansteuersignals 72 und des verstärkten Sensorsignals 74 dar. Ebenso wie das Ansteuersignal 72 entspricht das analog verstärkte Sensorsignal 74 weitgehend einem Rechtecksignal. Die Erfassungszeitpunkte sind durch. Pfeile gekennzeichnet. Diese haben entsprechend dem Steuersignal 71 einen konstanten Zeitversatz t1, t2 zum Beginn der jeweiligen Signalperiode des Ansteuersignals 72. Der Zeitversatz t1, t2 wurde so gewählt, dass die Einschwingvorgänge an den Flanken des Sensorsignals 74 nicht erfasst werden. Stattdessen wird eine Amplitude im weitgehend linearen Signalabschnitt im mittleren Bereich der Halbperioden des Sensorsignals 74 erfasst.

Zur weiteren Verarbeitung werden die nacheinander digitalisierten Signalwerte im Speicher 44 abgelegt. In der dargestellten Ausführung sind vier Speicherstellen vorgesehen. Die in ersten Halbperioden des Sensorsignals erfassten Werte werden jeweils auf ungeradzahlig nummerierten Speicherstellen D1, D3 abgelegt. Die in zweiten Halbperioden erfassten Werte werden auf geradzahlig nummerierten Speicherstellen D2, D4 abgelegt. Die digitale Recheneinheit 46 berechnet aus den gespeicherten Werten nach der Rechenvorschrift

$$D1 - D2 + D3 - D4$$

Einen Positionswert. Dieses Messergebnis dient der Regeleinheit 16 als Ist-Wert für die Zylinderkolbenposition.

Der Ist-Wert für die Zylinderkolbenposition wird der Regel- und Steuerlogik 48 zugeführt, die zudem eine Sollwertvorgabe 75 erhält. Aus diesem beiden Werten ermittelt die Regel- und Steuerlogik 48 eine Stellgröße 76, die über die Ausgangsschaltung 50 und die Ausgangsanschlüsse 20, 21 den Ventilen 24 und 26 zugeführt wird.

Für das Steuersignal 70 bzw. das Ansteuersignal 72 ist eine Frequenz von 5kHz vorgesehen. Der Analog/Digital-Umsetzer wird dementsprechend mit einer Frequenz von 10kHz betrieben. Die Zeitverzögerung der Messung beträgt durch die Berücksichtigung von 4 erfassten Sensorwerten etwa 2 Signalperioden des Ansteuersignals 72. Bei Verwendung eines geeignet schnellen Microcontrollers 40 fällt die für Speicher- und Rechenvorgänge benötigte Zeit sehr gering aus, so dass die Zeitverzögerung der Messung bei unter 0,5ms liegt.

Ein geeigneter Microcontroller ist z.B. der Motorola MPC555, der derzeit mit 40Mhz Taktfrequenz erhältlich ist. Dieser Microcontroller enthält neben einem Speicher, einem integrierten Analog/Digital-Umsetzer und einer Digital/Analog-Ausgabeschaltung auch einen Prozessor, der Rechenoperationen und die Ausführung eines Steuerprogramms erlaubt. Außerdem ist ein programmierbarer Zeitsignalgenerator (Time Process Unit, TPU) vorhanden.

Die Signalerzeugung für das Ansteuersignal 72, die Erfassung der Messwerte des Sensorsignals 74, das Ablegen der Messwerte in bestimmte Speicherstellen und die Ausführung einer Rechenvorschrift auf Basis der gespeicherten Werte lassen sich effizient und flexibel mit dem auf dem Prozessor 54 ausgeführten Steuerprogramm steuern. Die Regel- und Steuerlogik 48 lässt sich ebenfalls in einem solchen Programm implementieren.

Das Steuerprogramm ist so ausgelegt, dass - wie gesagt- die mit dem ersten Zeitversatz t1 erfassten Sensorsignalwerte in den ungeradzahlig nummerierten Speicherstellen D1, D3 und die mit dem zweiten Zeitversatz t2 erfassten Sensorsignalwerte in den geradzahlig nummerierten Speicherstellen D2, D4 abgelegt werden. Der Zeitversatz t1 bzw. t2 ist jeweils so gewählt, dass ausgehend vom Steuersignal 70 bzw. dem Ansteuersignal 72 eine Erfassung in der ersten bzw. der zweiten Halbperiode des Sensorsignals erfolgt. Durch den Bezug der Rechenvorschrift D1-D2+D3-D4 auf die Speicherstellen D1, D2, D3, D4 ist gewährleistet, dass Werte aus der ersten Halbperiode des Sensorsignals unverändert und dass Werte aus der zweiten Halbperiode des Sensorsignals stets mit einem negierten Vorzeichen in das berechnete Messergebnis einfließen. In Abhängigkeit von dem Zeitversatz t1 oder t2 ist dadurch also das Vorzeichen der auf den erfassten Wert angewandten Rechenoperation festgelegt. Im übrigen ergibt sich durch die Rechenvorschrift D1-D2+D3-D4 in Verbindung mit den entsprechenden Erfassungszeitpunkten eine Synchrongleichrichtung der erfassten Sensorsignalwerte.

Der jeweilige Zeitversatz t1, t2 ist zweckmäßiger Weise so vorgegeben, dass ein möglichst konstanter Signalabschnitt erfasst wird. Bei der Auslegung des Messsystems bestimmen die Übertragungseigenschaften des Sensors 12 solche Signalabschnitte. Signalabschnitt, die Einschwingvorgänge abbilden, eigene sich weniger für die digitale Erfassung, da die Anforderungen an die zeitliche Präzision der Erfassung wesentlich höher sind.

Wenn eine schnellere Sensorauswertung gewünscht ist, kann auf der Grundlage von nur einem oder zwei erfassten Sensorsignalwerten ein Messergebnis berechnet werden. Die Zuordnung zwischen Zeitversatz t1, t2 und Speicherstellen D1, D2 wird dabei beibehalten.

Bei Verwendung eines einzelnen erfassten Sensorsignalwertes wird die durch den Differenzverstärker dem Sensorsignal überlagerte Gleichspannung U1 vom Messwert abgezogen. Entsprechend lautet die Rechenvorschrift D1-U1 falls ein mit Zeitversatz t1 erfasster Wert ausgewertet wird. Ein mit Zeitversatz t2 erfasster Wert wird gemäß der Vorschrift (—D2-U2) ausgewertet. Unabhängig von der Signalperiode des Sensorsignals ergibt sich so ein nur von der Sensorauslenkung abhängiger Positionswert. Die Richtung der Sensorauslenkung gegenüber der Mittelstellung des Kerns wird durch das Vorzeichen des Positionswerts angezeigt. Bei Verwendung von zwei Messwerten aus unterschiedlichen Signalhalbperioden wird bereits durch die Differenzbildung D1-D2 die überlagerte Gleichspannung U1 aus dem Messergebnis eliminiert.

Um die Störanfälligkeit zu verringern, kann die Anzahl der für die Auswertung erfassten Werte erhöht werden und ein Mittelwert der erfassten Werte gebildet werden, so dass der Einfluss von Rauschen bzw. von eingestreuten Störsignalen vermindert ist. Ebenso ist es möglich durch die Verwendung von mehreren Messwerten die Auflösung des Messergebnisses gegenüber dem erfassten Sensorsignal rechnerisch zu erhöhen. Diese Technik ist als "Oversampling" bekannt.

Durch die Auswertung einer größeren Zahl von erfassten Werten erhöht sich außer der Genauigkeit und Zuverlässigkeit des berechneten Messergebnisses auch die Zeitverzögerung bei der Signalauswertung. Allerdings kann aufgrund der programmgesteuerten Auswertung die Zahl der zur Berechnung herangezogenen Werte beliebig variiert werden. Dadurch ist es möglich, die Genauigkeit der Messung in Abhängigkeit vom Bewegungszustand der geregelten Achse zu steuern. Z. B. können beim Anfahren einer bestimmten Vorgabeposition mit einer zunächst schnellen Bewegung der geregelten Achse Messwerte auf der Basis jeweils eines einzelnen erfassten Werts mit sehr geringer Verzögerung im Bereich von 0,1 ms bereitgestellt werden. Beim Verlangsamen der Achsbewegung kann die Genauigkeit der Positionsbestimmung durch die Berücksichtigung mehrerer erfasster Signalwerte erhöht werden, so dass die Vorgabeposition präzise angefahren wird.

Falls mehr als 4 Werte für die Berechnung des Messergebnisses erfasst werden, wird die Zahl der Speicherstellen entsprechend angepasst. Wenn eine gleiche Anzahl der in der ersten Halbperiode des Sensorsignals erfassten Werte und der in der zweiten Halbperiode des Sensorsignals erfassten Werte zur Berechnung berücksichtigt werden, fließt eine dem Sensorsignal überlagerte Gleichspannung U1 nicht in das Berechnungsergebnis ein.

Bei Verwendung eines entsprechend schnellen Analog/Digital-Umsetzers 42 können natürlich auch mehr als zwei Werte des Sensorsignals in einer Signalperiode erfasst werden. Das Ablegen der erfassten Werte in den geradzahlig bzw. ungeradzahlig nummerierten Speicherstellen in Abhängigkeit von dem jeweiligen Zeitversatzwert stellt die korrekte Berechnung eines Positionswerts nach der oben angegebenen Rechenvorschrift sicher.

Die beschriebene Messvorrichtung ermöglicht eine kontinuierliche Auswertung des Sensorsignals dadurch, dass nach dem Auffüllen der Speicherstellen der jeweils älteste gespeicherte Wert von einem neu erfassten Wert überschrieben wird. Die Berechnung des Positionswertes erfolgt in diesem Fall jeweils sobald der neue Wert gespeichert ist, mit der selben Frequenz wie die Erfassung der Sensorsignalwerte.

Andererseits erlaubt die Messvorrichtung auch eine Erfassung des Sensorsignals und damit des Positionswertes zu einem beliebig festlegbaren Zeitpunkt, da sich die Signalzustände des Ansteuersignals 72 über den Zeitsignalgenerator 52 des Microcontrollers 40 präzise vorgeben lassen. Somit lässt sich sicherstellen, dass zu einem gewählten Zeitpunkt ein bestimmter Signalzustand des Sensorsignals zur Erfassung bereitsteht.

Bezugszeichenliste

| 10 | Zylinder |
|----|----------|
| 11 | Kolbenstange |
| 12 | Wegsensor |
| 14 | elektrische Leitung |
| 16 | Regeleinheit |
| 18 | Sensoranschluss |
| 20 | Ausgangsanschluss |
| 21 | Ausgangsanschluss |
| 22 | elektrische Leitung |
| 23 | elektrische Leitung |
| 24 | Wegeventil |
| 26 | Absperrventil |
| 30 | Primärspule |
| 32 | Sekundärspule |
| 33 | Sekundärspule |
| 34 | Kern |
| 40 | Microcontroller |
| 42 | Analog/Digital-Umsetzer |
| 44 | Speicher |
| 46 | Recheneinheit |
| 48 | Regel- und Steuerlogik |
| 50 | Ausgangsschaltung |
| 52 | Zeitsignalgenerator |
| 54 | Prozessor |
| 60 | Signalerzeuger |
| 61 | elektronischer Schalter |
| 62 | Differenzverstärker |
| 63 | Verstärkerschaltung |
| 64 | Anpassverstärker |
| 65 | Operationsverstärker |
| 66 | NTC-Widerstand |
| 67 | Digitalpotentiometer |
| 70 | Steuersignal |
| 71 | Steuersignal |
| 72 | Ansteuersignal für den Sensor |
| 73 | Steuersignal |
| 74 | verstärktes Sensorsignal |
| 75 | Sollwert |
| 76 | Stellgröße |

**Patentansprüche**

1.  Messvorrichtung zur digitalen Erfassung einer Messgröße, umfassend:

einen Signalerzeuger (60) zum Erzeugen eines periodischen, elektrischen Ansteuersignals (72) einer vorgegebenen Signalform,
einen Sensor (12), der eingangsseitig mit dem Signalerzeuger (60) verbunden ist, und der ausgangsseitig ein von der Messgröße abhängiges Messsignal erzeugt, dessen Signalform durch das Ansteuersignal (72) bestimmt ist,
einen Analog/Digital-Umsetzer (42) zur Erfassung eines Momentanwerts des Messsignals und
eine digitale Recheneinheit (46) zur Verarbeitung des von dem Analog/Digital-Umsetzer (42) erfassten Werts,
**dadurch gekennzeichnet, dass**
eine Steuervorrichtung (52, 54) vorgesehen ist, die den Analog/Digital-Umsetzer (42) so ansteuert, dass dieser mit einem konstanten Zeitversatz (t1, t2) bezüglich einer Signalperiode des Ansteuersignals (72) den Momentanwert des Messsignals erfasst, und die die Recheneinheit (46) so ansteuert, dass in Abhängigkeit von der Größe des Zeitversatzes (t1, t2) ein Vorzeichen einer auf den erfassten Wert angewandten Rechenoperation festgelegt ist.

2.  Messvorrichtung nach Anspruch 1, **dadurch gekennzeichnet, dass** der Signalerzeuger (60) einen Schalter (61) umfasst, der seitens der Steuervorrichtung (52) mit einem Schaltsignal (70) ansteuerbar ist.

3.  Messvorrichtung nach Anspruch 1 oder 2, **dadurch gekennzeichnet, dass** das der Signalerzeuger (60) ein zwischen zwei vorgegebenen Spannungswerten oszillierendes Rechtecksignal erzeugt.

4.  Messvorrichtung nach einem der vorhergehenden Ansprüche, **dadurch gekennzeichnet, dass** während einer Periode des Messsignals ein erster und ein zweiter Signalabschnitt mit unterschiedlichen, jedoch innerhalb des jeweiligen Signalabschnitts annähernd konstanten Signalamplituden vorhanden sind, und dass ein Zeitpunkt der Momentanwerterfassung innerhalb eines dieser Signalabschnitte liegt.

5.  Messvorrichtung nach Anspruch 4, **dadurch gekennzeichnet, dass** ein Speicher (44), der eine erste Speicherstelle (D1) für die Ablage eines innerhalb des ersten Signalabschnitts erfassten Werts und der eine zweite Speicherstelle (D2) für die Ablage eines innerhalb des zweiten Signalabschnitts erfassten Werts aufweist, vorgesehen ist und dass die Recheneinheit (46) den in der zweiten Speicherstelle (D2) abgelegten Zahlenwert von dem in der ersten Speicherstelle (D1) abgelegten Zahlenwert subtrahiert.

**6.** Messvorrichtung nach Anspruch 5, **dadurch gekennzeichnet, dass** eine gleiche Anzahl erster Speicherstellen (D1, D3) und zweiter Speicherstellen (D2, D4) zur Ablage einer geraden Anzahl von aufeinander folgend erfassten Werten vorgesehen ist, und dass die Recheneinheit (46) die aus den Werten jeweils einer ersten Speicherstelle (D1, D3) und einer zweiten Speicherstelle (D2, D4) gebildeten Differenzen aufsummiert.

**7.** Messvorrichtung nach Anspruch 5 oder 6, **dadurch gekennzeichnet, dass** die Steuervorrichtung (54) den Speicher (44) veranlasst, nach Auffüllen der ersten und zweiten Speicherstellen (D1, D2, D3, D4) den jeweils ältesten Wert zu überschreiben.

**8.** Messvorrichtung nach einem der Ansprüche 5 bis 7, **dadurch gekennzeichnet; dass** zwei erste und zwei zweite Speicherstellen (D1, D2, D3, D4) vorgesehen sind, um vier aufeinander folgend erfasste Messsignalwerte zu speichern, und dass die Recheneinheit (46) aus den vier gespeicherten Werten ein numerisches Messergebnis berechnet.

**9.** Messvorrichtung nach einem der Ansprüche 4 bis 9, **dadurch gekennzeichnet, dass** der zweite Signalabschnitt gegenüber dem ersten Signalabschnitt eine Zeitverschiebung um eine halbe Periodendauer des Messsignals oder des Ansteuersignals (72) aufweist.

**10.** Messvorrichtung nach einem der vorhergehenden Ansprüche, **dadurch gekennzeichnet, dass** ein Anpassverstärker (64), dessen Verstärkungsfaktor durch einen temperatursensitiven Widerstand (66) gesteuert ist, zwischen den Sensor (12) und den Analog/Digital-Umsetzer (42) geschaltet ist.

**11.** Messvorrichtung nach einem der vorhergehenden Ansprüche, **dadurch gekennzeichnet, dass** eine elektrische Verbindungsleitung zwischen dem Sensor (12) und dem Analog/Digital-Umsetzer (42) über einen hochohmigen Widerstand (R1) mit einem elektrischen Potential (U2) verbunden ist, das außerhalb des Spannungsbereichs liegt, in dem das Messsignal variiert.

**12.** Messvorrichtung nach einem der vorhergehenden Ansprüche, **dadurch gekennzeichnet, dass** der Sensor (12) einen induktiven Wegsensor, insbesondere einen Differentialtransformatorsensor umfasst.

**13.** Antriebsregler für eine hydraulisch oder elektrisch angetriebene Achse, der einen Microcontroller (40) zur Ansteuerung eines Achsenantriebs aufweist, **dadurch gekennzeichnet, dass** eine Messvorrichtung nach einem der Ansprüche 1 bis 12 zur Erfassung einer Achsenposition vorgesehen ist, und dass die Steuervorrichtung (54, 52) der Messvorrichtung als ein auf dem Microcontroller (40) ausführbares Programm implementiert ist.

**14.** Antriebsregler nach Anspruch 13, **dadurch gekennzeichnet, dass** der Analog/Digital-Umsetzer (42) und die Recheneinheit (46) im Microcontroller (40) integriert sind.

**15.** Antriebsregler nach Anspruch 13 oder 14, **dadurch gekennzeichnet, dass** zwischen den Sensor (12) und den Analog/Digital-Umsetzer (42) ein Verstärker (64) geschaltet ist, dessen Verstärkungsfaktor durch den Microcontroller (40) steuerbar ist.

FIG.1

FIG. 2

EP 1 780 514 A1

FIG. 3 A

FIG. 3 B

FIG.4

FIG.5

EP 1 780 514 A1

**Europäisches Patentamt**

**EUROPÄISCHER RECHERCHENBERICHT**

Nummer der Anmeldung

EP 06 00 9624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 857 919 A (BRASWELL FRANK M [US]) 15. August 1989 (1989-08-15) | 1-9,12 | INV. G01D5/22 |
| Y | * Spalte 2, Zeile 26 - Spalte 3, Zeile 56; Abbildungen 1,2 * | 1-15 | G01D3/032 |
| Y,D | EP 0 587 844 B1 (MICRO EPSILON MESSTECHNIK [DE]) 13. Mai 1998 (1998-05-13) * Seiten 1-2; Abbildungen 1,3,4,7,8,10 * | 1-15 | |
| Y | US 6 753 686 B2 (TSUBOI MASASHI [JP]) 22. Juni 2004 (2004-06-22) * Spalte 1; Anspruch 5; Abbildungen 1,2,4,7 * | 1-15 | |
| Y | GB 2 068 124 A (FISHER K W J) 5. August 1981 (1981-08-05) * das ganze Dokument * | 1-15 | |
| Y | US 6 285 719 B1 (SOBEL JARL [SE]) 4. September 2001 (2001-09-04) * Spalten 5-6; Abbildungen 1,2 * | 1-15 | |

| RECHERCHIERTE SACHGEBIETE (IPC) |
|---|
| G01D G01B |

Der vorliegende Recherchenbericht wurde für alle Patentansprüche erstellt

| Recherchenort | Abschlußdatum der Recherche | Prüfer |
|---|---|---|
| München | 8. Februar 2007 | Kallinger, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

13

## ANHANG ZUM EUROPÄISCHEN RECHERCHENBERICHT
## ÜBER DIE EUROPÄISCHE PATENTANMELDUNG NR.

EP 06 00 9624

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 4857919 | A | 15-08-1989 | KEINE | | |
| EP 0587844 | B1 | 13-05-1998 | WO | 9320409 A1 | 14-10-1993 |
| | | | EP | 0587844 A1 | 23-03-1994 |
| | | | US | 5477473 A | 19-12-1995 |
| US 6753686 | B2 | 22-06-2004 | CN | 1395080 A | 05-02-2003 |
| | | | EP | 1262732 A1 | 04-12-2002 |
| | | | US | 2002171435 A1 | 21-11-2002 |
| GB 2068124 | A | 05-08-1981 | KEINE | | |
| US 6285719 | B1 | 04-09-2001 | AU | 3993300 A | 23-10-2000 |
| | | | EP | 1173738 A1 | 23-01-2002 |
| | | | JP | 2002541692 T | 03-12-2002 |
| | | | WO | 0060326 A1 | 12-10-2000 |
| | | | SE | 513954 C2 | 04-12-2000 |
| | | | SE | 9901199 A | 02-10-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9320409 A
- JP 8094383 A